# EUROPEAN PATENT APPLICATION

(11) **EP 2 530 548 A2**
(43) Date of publication of application: **05.12.2012**
(21) Application number: 12170095.9
(22) Date of filing: 30.05.2012
(51) Int. Cl.: G05B 19/418, G05B 23/02, H04L 12/40

(54) **Systems and methods for alert visualization**

(30) Priority: 31.05.2011 US 201113149597
(71) Applicant: General Electric Company, Schenectady, NY 12345 (US)
(72) Inventor: Karaffa, John Michael, Salem, VA Virginia 24153-6422 (US); Kreft, Dana Robert, Salem, VA Virginia 24153-6422 (US); McMillan, David Evans, Salem, VA Virginia 24153-6422 (US)
(74) Representative: Picker, Madeline Margaret

(57) **Abstract**

The embodiments described herein include a system and a method. In one embodiment, an industrial process control system (10) includes a controller (26, 27) configured to couple to a field device (38, 40, 42, 44). The industrial process control system (10) further includes an alarm viewer (80) configured to couple to the controller (26, 27). The alarm viewer (80) comprises a user interface control. The controller (26, 27) is configured to receive alert information from the field device (38, 40, 42, 44) in a first protocol and communicate the alert information to the alarm viewer (80) in a second protocol, and the alarm viewer (80) is configured to present, via the user interface control, a first alert indication of the alert information.

## Description

### BACKGROUND OF THE INVENTION

The subject matter disclosed herein relates to visual presentation of information, and more specifically, to visualization of alerts.

Certain systems, such as industrial control systems, may provide for control capabilities that enable the execution of computer instructions in various types of devices, such as sensors, pumps, valves, and the like. For example, a communications bus may be used to send and receive signals to the various devices. Each device may issue alerts related to the device conditions and control logic. However, various types of devices from different manufacturers may communicate over the communications bus. Accordingly, visualizing the alerts related to these multiple devices may be complex and inefficient.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, an industrial process control system includes a controller configured to couple to a field device. The industrial process control system further includes an alarm viewer configured to couple to the controller. The alarm viewer comprises a user interface control. The controller is configured to receive alert information from the field device in a first protocol and communicate the alert information to the alarm viewer in a second protocol, and the alarm viewer is configured to present, via the user interface control, a first alert indication of the alert information.

In a second embodiment, a method includes collecting, via a controller of an industrial control system, alerts from a field device in a first protocol. The method further includes transferring, via the controller of the industrial control system, the alerts to an alert viewer in a second protocol. The first protocol is different from the second protocol. The method also includes providing, via a user interface control of the alert viewer, one or more alert indications to a user.

In a third embodiment, a non-transitory tangible computer-readable medium including executable code is provided. The executable code includes instructions for collecting, via a controller of an industrial control system, alerts from a field device in a first protocol. The executable code further includes instructions for transferring, via the controller of the industrial control system, the alerts to an alert viewer in a second protocol. The first protocol is different from the second protocol. The executable code also includes instructions for providing, via a user interface control of the alert viewer, one or more alert indications to a user.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a schematic diagram of an embodiment of an industrial control system, including a communications bus;
FIG. 2 is a block diagram including embodiments of various components of the industrial control system of FIG. 1;
FIG. 3 is a flowchart of an embodiment of a process for collecting and transferring alert information;
FIG. 4 is an information flow diagram of an embodiment of a Fieldbus process and an alarm process;
FIG. 5 illustrates embodiments of alert icons displayed in a user interface of the industrial control system of FIG. 1;
FIG. 6 is a screen view of an embodiment of a treeview control displayed in a user interface of the industrial control system of FIG. 1;
FIG. 7 is a screen view of an embodiment of a treeview control displayed in a user interface of the industrial control system of FIG. 1; and
FIG. 8 is a screen view of an embodiment of a list control displayed in a user interface of the industrial control system of FIG. 1.

### DETAILED DESCRIPTION OF EMBODIMENTS OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

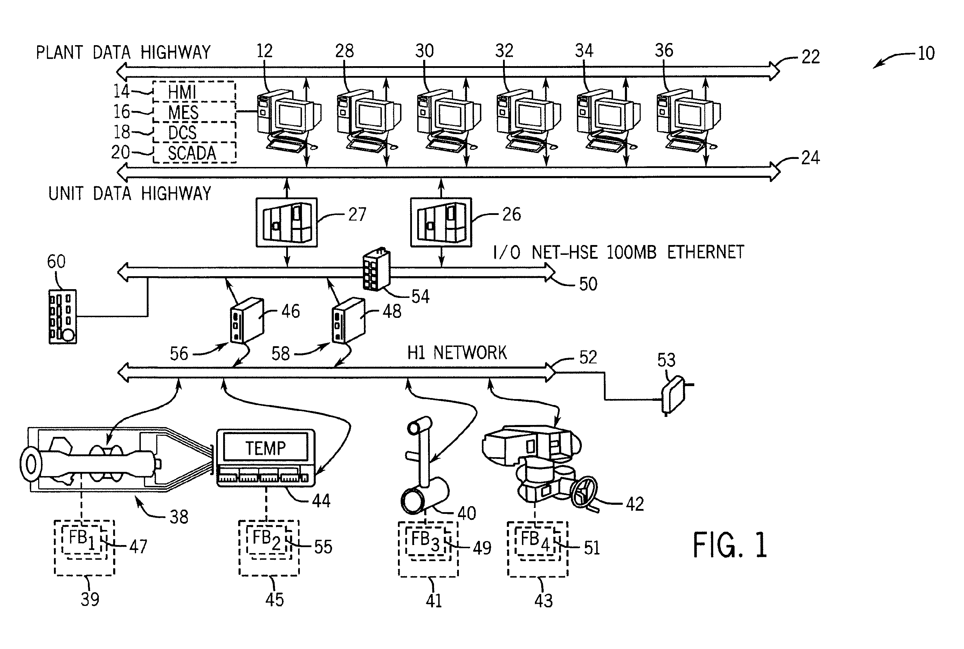

Industrial control systems may include controller systems suitable for interfacing with a variety of field devices, such as sensors, pumps, valves, and the like. For example, sensors may provide inputs to the controller system, and the controller system may then derive certain actions in response to the inputs, such as actuating the valves, driving the pumps, and so on. In certain controller systems, such as the Mark™ VIe controller system, available from General Electric Co., of Schenectady, New York, multiple field devices may be communicatively coupled to and controlled by a controller. Indeed, multiple controllers may be controlling multiple field devices, as described in more detail with respect to FIG. 1 below. The devices communicatively connected to the controller may include field devices, such as Fieldbus Foundation devices, that include support for the Foundation H1 bi-directional communications protocol. Accordingly, the devices may be communicatively connected with the controller in various communication segments, such as H1 segments, attached to linking devices, to enable a plant-wide network of devices.

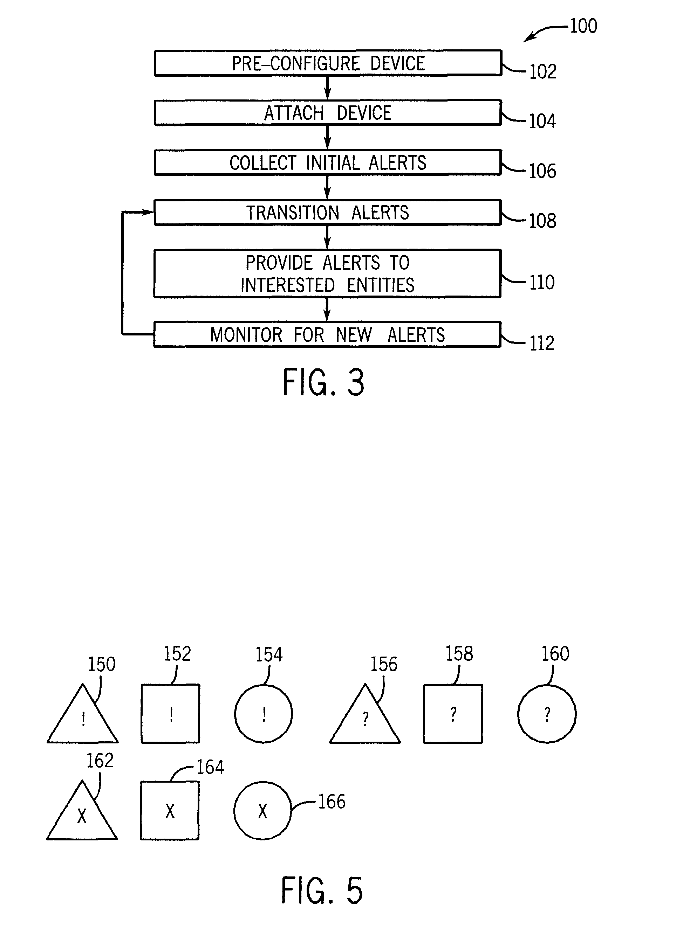

Each field device may include computer instructions or control logic encapsulated in function blocks. For example, a proportional-integral-derivative (PID) function block may include PID instructions suitable for implementing a closed-loop control of certain processes, such as industrial processes. Likewise, an Analog Input (AI) function block and an Analog Output (AO) function block may be used to retrieve input data and to submit output data, respectively. Indeed, various types of function blocks may be provided that can include a variety of computer instructions or control logic, as described in more detail below with respect to FIG. 1. The field device may then execute the computer instructions or control logic in the function block. Different types of alerts, such as alarms and events, may be included in each function block, as described in more detail below with respect to FIG. 3. Thus, the field devices may issue a variety of alarms and events related to execution of the function blocks and related to diagnostic conditions of the field devices. As referred to herein, the term "alerts" includes both alarms and events.

Generally, as used herein, an "alarm" refers to a condition that may include acknowledgment by a human operator, while an "event" refers to a condition that may include automatic acknowledgment. Alarms may further include diagnostic alarms and process alarms. Process alarms generally include conditions (e.g., alarm limits) that a user may define that enable an alert notification once the condition occurs. For example, a rising edge transition of a Boolean variable may be defined by the user in a control loop. A value rising above an edge value (e.g., 100) may then trigger an alert notification based on this process alarm. Diagnostic alarms generally include predetermined conditions that may not be user defined. For example, a manufacturer may include a predetermined operating temperature range for a device, and temperature values outside of the desired temperature range may trigger an alert notification based on the diagnostic alarm.

In one embodiment, the field devices and the function blocks associated with each field device may be pre-configured before physically attaching the field devices to the industrial control system. For example, a user, such as a control engineer or commissioning engineer, may select certain function blocks to use in a control loop (e.g., instantiate the function blocks) and pre-configure the field device by programming a control loop with the selected function blocks. When the pre-configured field device is connected into the industrial control system, the field device may be automatically integrated into the existing process and corresponding control loop. However, visualizing alert information for the newly connected field device may be more difficult. For example, a controller may be manufactured by one entity, while the field devices may each be manufactured by different entities.

As described below, the systems and methods disclosed herein enable the automatic incorporation and distribution of visual alert information for field devices after the field devices are physically attached to the industrial control system. Such a "plug and play" approach enables alert information to be gathered from the field devices and provided visually to any number of interested components of the industrial control system, such as alarm clients. Further, this "plug and play" approach may minimize or eliminate human involvement during the incorporation and distribution of the alert devices and the presentation of the visualizations. In some embodiments, the alert clients may include clients communicating in a protocol different than the protocol used by the field devices. For example, the field devices may use a Fieldbus Foundation communications protocol, while the alert clients may use a serial data interface (SDI) communications protocol. Indeed, the systems and processes disclosed herein enable harvesting of alert information from field devices that may be suitable for use in a variety of alert clients, including alert clients communicating in a variety of protocols. In this manner, visual alert information for a variety of field devices may be easily provided and presented to the user.

With the foregoing in mind, FIG. 1 depicts an embodiment of an industrial process control system 10. The control system 10 may include a computer 12 suitable for executing a variety of field device configuration and monitoring applications, and for providing an operator interface through which an engineer or technician may monitor the components of the control system 10. The computer 12 may be any type of computing device suitable for running software applications, such as a laptop, a workstation, a tablet computer, or a handheld portable device (e.g., personal digital assistant or cell phone). Indeed, the computer 12 may include any of a variety of hardware and/or operating system platforms. In accordance with one embodiment, the computer 12 may host an industrial control software, such as a human-machine interface (HMI) software 14, a manufacturing execution system (MES) 16, a distributed control system (DCS) 18, and/or a supervisor control and data acquisition (SCADA) system 20. For example, the computer 12 may host the ControIST™ software, available from General Electric Co., of Schenectady, New York.

Further, the computer 12 is communicatively connected to a plant data highway 22 suitable for enabling communication between the depicted computer 12 and other computers 12 in the plant. Indeed, the industrial control system 10 may include multiple computers 12 interconnected through the plant data highway 22. The computer 12 may be further communicatively connected to a unit data highway 24, suitable for communicatively coupling the computer 12 to industrial controllers 26 and 27. The system 10 may include other computers coupled to the plant data highway 22 and/or the unit data highway 24. For example, embodiments of the system 10 may include a computer 28 that executes a virtual controller, a computer 30 that hosts an Ethernet Global Data (EGD) configuration server, an Object Linking and Embedding for Process Control (OPC) Data Access (DA) server, an alarm server, or a combination thereof, a computer 32 hosting a General Electric Device System Standard Message (GSM) server, a computer 34 hosting an OPC Alarm and Events (AE) server, and a computer 36 hosting an alarm viewer. Other computers coupled to the plant data highway 22 and/or the unit data highway 24 may include computers hosting Cimplicity™, ControIST™, and ToolboxST™, available from General Electric Co., of Schenectady, New York.

The system 10 may include any number and suitable configuration of industrial controllers 26 and 27. For example, in some embodiments the system 10 may include one industrial controller 26, or two (e.g., 26 and 27), three, or more industrial controllers for redundancy. The industrial controllers 26 and 27 may enable control logic useful in automating a variety of plant equipment, such as a turbine system 38, a valve 40, and a pump 42. Indeed, the industrial controller 26 and 27 may communicate with a variety of devices, including but not limited to temperature sensors 44, flow meters, pH sensors, temperature sensors, vibration sensors, clearance sensors (e.g., measuring distances between a rotating component and a stationary component), and pressure sensors. The industrial controller may further communicate with electric actuators, switches (e.g., Hall switches, solenoid switches, relay switches, limit switches), and so forth.

Each field device 38, 40, 42, and 44 may include a respective device description (DD) file, such as the depicted DD files 39, 41, 43, and 45. The DD files 39, 41, 43, and 45 may be written in a device description language (DDL), such as, the DDL defined in the International Electrotechnical Commission (IEC) 61804 standard. In some embodiments, the files 39, 41, 43, and 45 are tokenized binary files. That is, the DD files 39, 41, 43, and 45 may include data formatted in a tokenized binary format useful in reducing the size of the DD files 39, 41, 43, and 45. The DD files 39, 41, 43, and 45 may each include one or more function blocks 47, 49, 51, and 55. The function blocks 47, 49, 51, and 55 may include computer instructions or computer logic executable by processors. In this way, the field devices 38, 40, 42, and 44 may contribute control logic and other computer instructions towards the execution of processes in the industrial process control system 10.

In the depicted embodiment, the turbine system 38, the valve 40, the pump 42, and the temperature sensor 44 are communicatively interlinked to the automation controller 26 and 27 by using linking devices 46 and 48 suitable for interfacing between an I/O NET 50 and a H1 network 52. For example, the linking devices 46 and 48 may include the FG-100 linking device, available from Softing AG, of Haar, Germany. In some embodiments, a linking device, such as the linking device 48, may be coupled to the I/O NET through a switch 54. In such an embodiment, other components coupled to the I/O NET 50, such as one of the industrial controllers 26, may also be coupled to the switch 54. Accordingly, data transmitted and received through the I/O NET 50, such as a 100 Megabit (MB) high speed Ethernet (HSE) network, may in turn be transmitted and received by the H1 network 52, such as a 31.25 kilobit/sec network. That is, the linking devices 46 and 48 may act as bridges between the I/O Net 50 and the H1 network 52. Accordingly, a variety of devices may be linked to the industrial controller 26, 27 and to the computer 12. For example, the devices, such as the turbine system 38, the valve 40, the pump 42, and the temperature sensor 44, may include industrial devices, such as Fieldbus Foundation devices that include support for the Foundation H1 bi-directional communications protocol. In such an embodiment, a Fieldbus Foundation power supply 53, such as a Phoenix Contact Fieldbus Power Supply available from Phoenix Contact of Middletown, PA, may also be coupled to the H1 network 52 and may be coupled to a power source, such as AC or DC power. The power supply 53 may be suitable for providing power to the devices 38, 40, 42, and 44, as well as for enabling communications between the devices 38, 40, 42, and 44. Advantageously, the H1 network 52 may carry both power and communications signals (e.g., alert signals) over the same wiring, with minimal communicative interference. The devices 38, 40, 42, and 44 may also include support for other communication protocols, such as those included in the HART® Communications Foundation (HCF) protocol, and the Profibus Nutzer Organization e.V. (PNO) protocol.

Each of the linking devices 46 and 48 may include one or more segment ports 56 and 58 useful in segmenting the H1 network 52. For example, the linking device 46 may use the segment port 56 to communicatively couple with the devices 38 and 44, while the linking device 48 may use the segment port 58 to communicatively couple with the devices 40 and 42. Distributing the input/output between the devices 38, 44, 40, and 42 by using, for example, the segment ports 56 and 58, may enable a physical separation useful in maintaining fault tolerance, redundancy, and improving communications time. In some embodiments, additional devices may be coupled to the I/O NET 50. For example, in one embodiment an I/O pack 60 may be coupled to the I/O NET 50. The I/O pack 60 may provide for the attachment of additional sensors and actuators to the system 10.

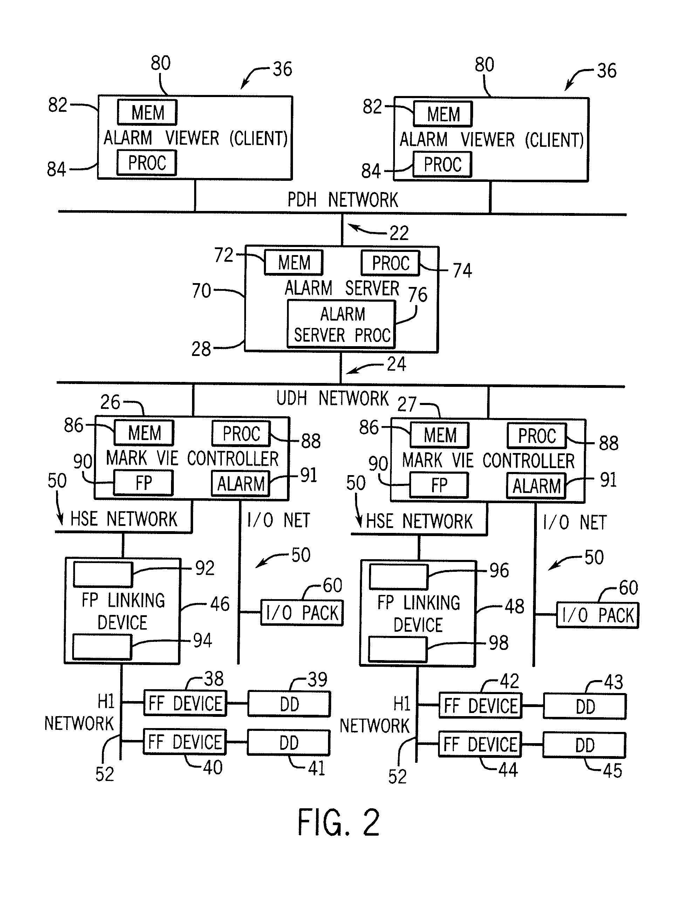

In certain embodiments, the devices 38, 40, 42, and 44 may provide data, such as alerts, to the system 10. These alerts may be handled in accordance with the embodiments described below. FIG. 2 depicts a block diagram of an embodiment of the industrial process control system 10 depicting various components in further detail. As described above, the system 10 may include an alarm server 70, executed on the computer 28, coupled to the plant data highway 22 and the unit data highway 24. The computer 28 may include a memory 72, such as non-volatile memory and volatile memory, and a processor 74, to facilitate execution of the alarm server 70. The alarm server 70 may execute an alarm server process 76 for receiving, processing, and responding to alarms received from the controllers 26 and 27. Multiple controllers, such as the controllers 26 and 27 may be set up for redundant operations. That is, should the controller 26 become inoperative, the controller 27 may take over and continue operations.

The system 10 may include additional computers 36 coupled to the plant data highway 22 that may execute alarm viewers 80. The alarm viewers 80 may enable a user to view and interact with the alarms processed by the alarm server 70. The computers 36 may each include a memory 82 and a processor 84 for executing the alarm viewer 80. Additionally, in some embodiments, the alarm viewers 80 may be executed on the computer 28 or any of the computers described above in FIG. 1. Further, the alarm viewers 80 may be included in the HMI 14, MES 16, DCS 18, and SCADA 20 shown in FIG. 1. The alarm server 70 may communicate with the alarm viewers 80 using any suitable alarm data protocol interpretable by the alarm viewers 80. The alarm viewers 80 may then present visual alert information, as described in more detail below with respect to FIGS. 5-8.

As described above, the controllers 26 and 27 are coupled to the unit data highway 24, and the controllers 26 and 27 may communicate with the alarm server 70 over the unit data highway 24. For example, in one embodiment, the controllers 26 and alarm server 70 may communicate using the SDI alarm protocol. The controllers 26 and 27 may each include a memory 86 and a processor 88 for executing the functions of the controllers 26 and 27. In one embodiment, the controllers 26 and/or 27 may execute a Fieldbus process 90 and an alarm process 91. The Fieldbus process 90 may be used to interface with the field devices 38, 40, 42, and 44 while the alarm process 91 may be used to provide for a centralized facility suitable for distributing alarm information, as described in more detail with respect to FIG. 3. Alert and function block information may be included in the DD files 39, 41, 43, and 45 corresponding to each filed device 38, 40, 42, and 44, respectively. As mentioned above, the controllers 26 and 27 may be coupled to the I/O pack 60 over the I/O NET 50. In one embodiment, the I/O pack 60 may communicate with the controllers 26 and 27 using the advanced digital logic (ADL) protocol.

As also described above, the controllers 26 and 27 may be coupled to linking devices 46 and 48 through an I/O NET 50. The linking devices 46 and 48 may communicate with the controllers 26 and 27 over the I/O NET 50. The linking devices 46 and 48 may also be coupled to the H1 network 52, and one linking device 46 may be coupled to devices 38 and 44 and another linking device 48 may be coupled to devices 40 and 42. The linking device 46 may include a memory 92, such as volatile and non-volatile memory, and the processor 94, and the linking device 48 may include a memory 96, such as volatile and non-volatile memory, and a processor 98. In one embodiment, the linking devices 46 and 48 may communicate with the controllers 26 and 27 using the Fieldbus Foundation protocol.

The industrial control system 10 may enable alarm and diagnostic information to be communicated from the various devices to a user, such as through the HMI 14 and the alarm viewers 80, as described in more detail below with respect to FIG. 3. For example, an alert that includes alarm and diagnostic information in a first format (e.g., Fieldbus Foundation protocol), may be received by the controller 26 and forwarded to the alarm server 70 in a second format (e.g., SDI protocol). By translating the alert information as necessary and by providing a common distribution service for alert information, including visual alert information, the controller 26 may enable the efficient use of a variety of devices communicating in different protocols.

FIG. 3 is a flowchart depicting an embodiment of a process 100 for capturing alert information and continuously providing the information to the alarm server 70 and the alarm viewers 80, as well as the redundant controllers 26 and 27 shown in FIG. 2. It is to be understood, that, in other embodiments, the controller 27 may be programmed for distributed operations rather than redundant operations. That is, each controller 26 and 27 may control different devices, and should the controller 26 become inoperable, the controller 27 may not take over operations of the controller 26. The process 100 may be implemented as executable code instructions stored on a non-transitory tangible computer-readable medium, such as the volatile or non-volatile memory 86 of the controller 26 and the memory 86 of the controller 27. A field device, such as any of the field devices 38, 40, 42, and 44 shown in FIGS. 1 and 2, may first be pre-configured (block 102) with function block and alert information. For example, the HMI 14, MES 16, DCS 18, and SCADA 20 may be used to provide one or more screens suitable for pre-configuring the field device 38 to provide for a desired control logic and alert information behavior. In one embodiment, the DD file 39 corresponding to the field device 38 may be used retrieve device configuration information, such as alert information. For example, the DD file 39 may include information such as function blocks associated with the field device 38, alerts corresponding to each function block, and alerts corresponding to the device 38 (e.g., diagnostic alarms).

A device placeholder (e.g., virtual device) may then be presented by the pre-configuration screen and selected by a user (e.g., control engineer or commissioning engineer) to enter configuration information related to the device. The configuration information read from the DD file 39 may include alert information that may include undefined alerts, low limit alarms (LO), high limit alarms (HI), critical low limit alarms (LO LO), critical high limit alarms (HI HI), deviation low alarms (DV LO), deviation high alarms (DV HI), discrete alarms (DISC), block alarms (BLOCK), write protect changed alarm (WRITE), static data update event, link associated with function block update event, trend associated with block update event, ignore bit string update event (IGNORE), integrator reset update event (RESET), or any other suitable alert parameters or other information. The user may pre-configure the alerts, for example, by assigning alert limit values, acknowledgement options (e.g., automatic acknowledgement of the alert, manual acknowledgement of the alert), alarm hysteresis (i.e., amount a process value must return within the alarm limit before an alarm condition clears), alert key (i.e., value used in sorting alerts), alert priority, and the like. The user may also pre-configure the function blocks and program a control loop with the function blocks associated with the device.

The device 38 may then be attached to the industrial control system 10 (block 104), such as by attaching the device to the H1 network 52. In some embodiments, the device 38 may have been removed from the H1 network 52, and then subsequently re-attached to the network 52. For example, if the device 38 became inoperable, the device 38 may have been removed and then replaced with a device 38 having the same model and manufacturer. In another example, the device 38 may have been inadvertently removed by collision with a forklift and then subsequently re-attached to the H1 network 52.

In one embodiment, the coupling (e.g., attaching or re-attaching) of the device to the H1 network 52 may result in an automatic commissioning of the device. That is, the configuration data entered during pre-configuration (block 102) of the device 38 may be automatically loaded into a memory of the device 38. Indeed, a "plug and play" process may automatically update the device 38 with any pre-configuration information detailed in the device placeholder (e.g., virtual device). In another embodiment, the device 38 may be attached to the H1 network 52 and the device may then be manually commissioned using, for example, a commissioning tag. The commissioning tag may include information such as device ID, model type, serial number, and the like. Once attached and commissioned (block 104), the device 38 may now be communicatively connected to all other components of the industrial control system 10.

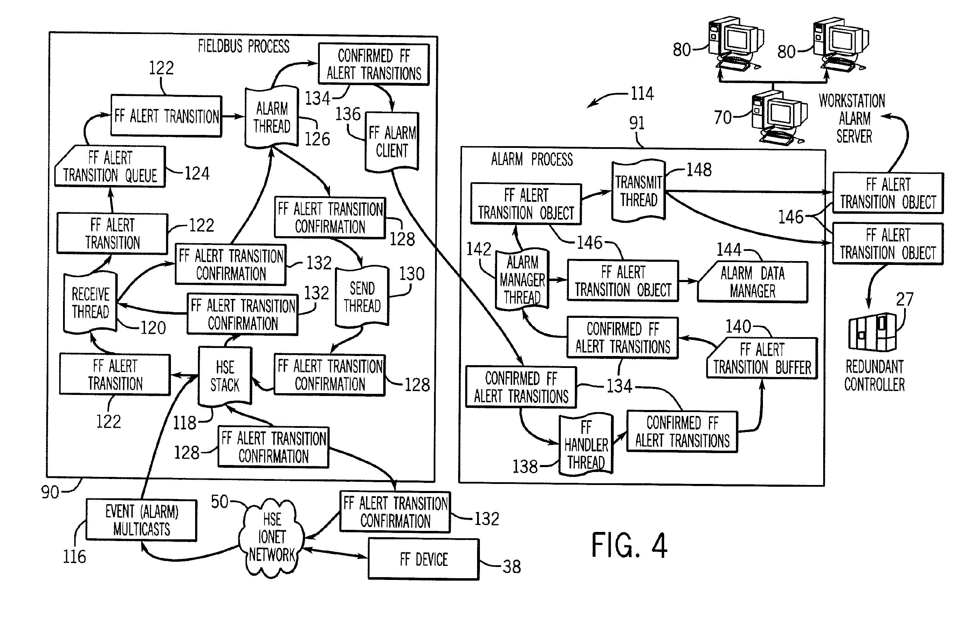

In the depicted embodiment, the process 100 may perform an initial alert collection (block 106) to retrieve alert data from the field device 38 when the device 38 is first attached to the H1 network 52 and commissioned. For example, the controller's Fieldbus process 90 may interact with the field device 38 via the linking device 46 to request alert data, as described in more detail below with respect to FIG. 4. The initial alert collection (block 106) may include retrieving all current alarms and events associated with the field device 38. For example, diagnostic alerts, such as alerts requesting recalibration of the field device 38, may be provided to the controller 26 shown in FIGS. 1 and 2. The alerts may then be transitioned (e.g., provided) to the alarm server 70 (block 108) in a protocol understandable by the alarm server, as described in more detail below with respect to FIG. 4, and then further provided to other entities of the system 10 (block 110), such as the alarm viewers 80 and redundant controllers 26. The alarm viewers 80 may then visually display the alert information, as described in more detail below with respect to FIGS. 5-8. The transitioning may include, for example, translating alarm information in one protocol (e.g., Foundation protocol), into alarm information in a different protocol (e.g., SDI protocol).

The process 100 may then monitor the field and linking device for new alerts (block 112). In one embodiment, monitoring for new alerts (block 112) may include listening for multicast broadcasts issued by the field devices, e.g., devices 38, 40, 42, and 44, and linking devices, e.g., the linking devices 46 and 48. All alerts related to the multicast broadcasts may then be subsequently transitioned to the alarm server 70 (block 108) for subsequent processing and delivery to the interested entities (block 110). By transitioning (e.g., translating) the alerts into a common protocol understandable by the alarm server 70, the systems and processes described herein enable a variety of devices to participate in sending and receiving alert information. In this manner, a more efficient and resilient alerting system is provided.

FIG. 4 is an information flow diagram 114 illustrating an embodiment of information flows between the Fieldbus process 90 and the alarm process 91 depicted in FIG. 2. The Fieldbus process 90 and its various components may be implemented as executable code instructions stored on a non-transitory tangible machine-readable medium, e.g., the volatile and non-volatile memory 86 of the controller 26. Likewise, the alarm process 91 and its various components may be implemented as executable code instructions stored on a non-transitory tangible machine-readable medium, e.g., the volatile and non-volatile memory 86 of the controller 26. The depicted information flow may be suitable for transitioning alerts from the field devices 38, 40, 42, and 44 to the alarm server 70 and redundant controller 27. That is, alerts from the field devices, 38, 40, 42, and 44 may be received and processed by the processes 90 and 91, and then provided to any number of entities of the industrial control system 10 (e.g., alarm server 70 and redundant controller 27) in the entities' preferred protocol.

In the depicted embodiment, the Fieldbus process 90 and the alarm process 91 are used to transition alerts to the alarm server 70 and the redundant controller 27. Specifically, the Fieldbus process 90 may "listen" for alerts issuing out of field devices 38, 40, 42, and 44, acknowledge the alerts, and transition the alert information to the alarm process 91. The alarm process 91 may then communicate with the alarm server 70 in a suitable protocol (e.g., SDI) and transmit the Fieldbus alert information. By enabling the translation of alert information issued in one protocol (e.g., Fieldbus protocol) into the alarm server 70 and alarm viewers 80 in a second protocol (e.g., SDI), the systems and processes described herein provide for enhanced alert compatibility, transmission and visualization of a variety of alert information.

In one embodiment, a field device, such as the field device 38, may issue an event or alarm multicast broadcast 116 to notify the system 10 of an alert condition (i.e., an event, an alarm, or a combination thereof). As depicted, the Fieldbus process 90 may receive the multicast broadcast 116 issuing out of the I/O Net 50. For example, the field device 38 may issue the event or alarm multicast broadcast 116, which may then be transmitted though the I/O Net 50 by the linking device 48 shown in FIGS. 1 and 2. In one embodiment, the multicast broadcast 116 may be received by an HSE stack 118 monitoring I/O Net 50 HSE ports. A receive thread 120 executing in the Fieldbus process 90 may continuously check for multicast broadcasts 116 received by the HSE stack 118. Upon receipt of the multicast broadcasts 116 by the HSE stack 118, the receive thread 120 may package all alert information (e.g., alarms and events) related to the multicast broadcasts 116 into a Fieldbus Foundation (FF) alert transition 122, and then transfer the FF alert transition 122 into a FF alert transition queue 124. Additionally, the receive thread 120 may notify an alarm thread 126 of the receipt and transfer of the FF alert transition 122.

The FF alert transition may include the multicasted event or alarm broadcast 116, as well as all information related to the multicast broadcasts 116. For example, the FF alert transition 122 may include undefined alerts, low limit alarms (LO), high limit alarms (HI), critical low limit alarms (LO LO), critical high limit alarms (HI HI), deviation low alarms (DV LO), deviation high alarms (DV HI), discrete alarms (DISC), block alarms (BLOCK), write protect changed alarm (WRITE), static data update event, link associated with function block update event, trend associated with block update event, ignore bit string update event (IGNORE), integrator reset update event (RESET), and any other related information, such as user pre-configuration information.

The alarm thread 126 may then retrieve the FF alert transition 122 from the queue 124 for further transmittal, such as for transmitting the FF alert transition 122 to the alarm process 91 and for confirmation of receipt of the multicast broadcast 116. For example, the alarm thread 126 may issue a FF alert transition confirmation 128 by using a send thread 130. The send thread 130 may dispose the FF alert transition confirmation 128 in the HSE stack 118, which may then be received by the field device 38 that issued the multicast broadcast 116. A confirmation 132 of receipt of the FF alert transition confirmation 128 may then be issued by the device 38. Indeed, receipt of the alert transition confirmation 128 by the alert issuing device 38 may be confirmed by issuing the confirmation 132. The confirmation 132 may be retrieved from the HSE stack 118 by the receive thread 120 and forwarded to the alarm thread 126. In this manner, the alarm thread 126 is notified for the receipt of the initial FF alert transition confirmation 128 by the alert issuing device 38.

Next, as shown in FIG. 4, the alarm thread 126 may then transmit confirmed FF alert transitions 134 to the alarm process 91 by using a FF alarm client 136. For example, the FF alarm client 136 may communicate with a FF handler thread 138 included in the alarm process 91 to deliver the confirmed FF alert transitions 134. The FF handler thread 138 may then store the confirmed FF alert transitions 134 in a FF alert transition buffer 140. In this manner, multiple FF alert transitions 134 may be buffered for more efficient processing.

After storing the confirmed FF alert transitions 134 in the buffer 140, an alarm manager thread 142 may then retrieve the FF alert transition 134 from the buffer 140 for further data processing and storage. For example, the information included in the FF alert transition 134 may be stored in an alarm data manager 144 as a FF alert transition object 146. In certain embodiments, the alarm data manager 144 may be a multi-dimensional data warehouse or any other suitable data store (e.g., relational database, network database, binary file, or any combination thereof). The alarm data manager 144 may not only store FF alert transition objects 146 and related alarms and events, but may also store information issued through the I/O packs 60 shown in FIGS. 1 and 2. Indeed, the alarm data manager 144 may store and manage alerts associated with a variety of alert systems and protocols, including Fieldbus Foundation, SDI, Profibus, and HART systems and protocols.

Once the FF alert transition object 146 is stored in the alarm data manager 144, the alarm manager thread 142 may then transmit the FF alert transition object 146 to other entities of the system 10. For example, a transmit thread 148 may transmit the FF alert transition object 146 to the redundant controller 27. As mentioned above, some embodiments may include two or more controllers, such as the controllers 26 and 27, to provide fault tolerance and redundancy. In certain embodiments, the controllers 26 and 27 may be communicatively coupled in a client/server relationship, as depicted in FIG. 4. This client/server relationship advantageously enables a controller 26 (i.e., a server controller) executing the alarm process 91 to manage and control alert information as a single "owner" of the information. The server controller 26 may then disseminate the alert information to a client controller, such as the depicted redundant controller 27 (i.e., client controller). One of the client controllers 27 may then take over the server role should the server controller 26 become otherwise inoperative. By providing alert information to multiple controllers, redundant and fault tolerant alert operations are enabled.

Additionally, the transmit thread 148 may transmit the FF alert transition object 146 to the alarm server 70 for further alert processing and distribution. The alarm server 70 may use a different communication protocol, such as the SDI protocol. Accordingly, the transmit thread 148 may transfer the FF alert transition object 146 by using the protocol supported by the alarm server 70. A variety of protocols may be supported suitable for communication with various alarm servers 70. For example, the system 10 may use the transmission control protocol/internet protocol (TCP/IP), user datagram protocol (UDP), hypertext transfer protocol (HTTP), institute of electrical and electronics engineers (IEEE) 802.11 (e.g., IEEE 802.11 a/b/g/n), Zigbee protocol, and Z-Wave. The alarm server 70 may then distribute alarms to the alarm viewers 80 depicted in FIG. 2. Advantageously, the information flow described with respect to FIG. 4 may provide for alert visualizations, which may be displayed as alarm icons depicted in FIG. 5, such as in a user interface of the system 10.

FIG. 5 depicts embodiments of visual alert indications provided as alert icons 150, 152, 154, 156, 158, 160, 162, 164, and 166 that may be used to display indications of alerts related to various components of the industrial control system 10, such as the field devices 38, 40, 42, and 44, the function blocks 47, 49, 51, and 55, the linking devices 46 and 48, the I/O NET 50, the H1 network 52, the power supply 53, and the I/O pack 60. The various alert icons 150, 152, 154, 156, 158, 160, 162, 164, and 166 may be displayed in a graphical user interface of the HMI 14, the MES 16, the DCS 18, the SCADA 20, and alarm viewers 80, such as described in more detail below.

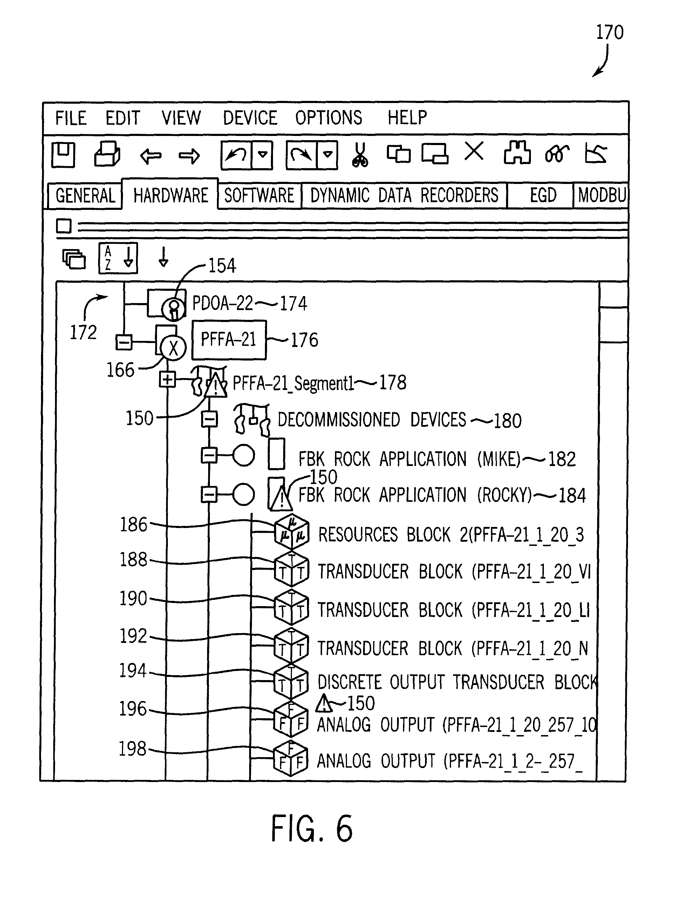

In one embodiment, the alert icons 150, 152, 154, 156, 158, 160, 162, 164, and 166 may be combined with existing icons, as depicted in FIG. 6, to provide a context for the alerts. For example, a controller icon or any other system 10 component icon may be combined or superimposed with any of the alert icons 150, 152, 154, 156, 158, 160, 162, 164, and 166 to denote that the alert may be related to the component. In this manner, the alert visualizations may provide for a more efficient mechanism to inform the user of alerts and the industrial control system 10 components that are associated with the alerts (e.g., controller 26 and 27, field devices 38, 40, 42, and 44, function blocks 47, 49, 51, and 55, and linking devices 46 and 48). In the depicted embodiment, the icons 150, 152, 154, 156, 158, 160, 162, 164, and 166 may include a triangular shape, representing a warning or a caution, to gain the attention of the user. In other embodiments, other shapes may be used, such as circular shapes, square shapes, rectangular shapes, hexagonal shapes, and the like. The icons 150, 152, 154, 156, 158, 160, 162, 164, and 166 may also include a background color, such as yellow, red, blue, green, and so forth, useful in focusing the attention of the user to the icons 150, 152, 154, 156, 158, 160, 162, 164, and 166. In other embodiments, audio alert indications may also be provided. For example, beeps, voice messages, and other audio signals may be used to draw attention to the visual alert indications.

FIG. 6 is a screen view 170 of an embodiment of a treeview control 172 of a graphical user interface that displays visual alarm information in a hardware context. That is, the treeview control 172 depicts virtual representations of hardware components of the system 10, such as the controller 26, the linking device 46, the linking device segment 56, the field devices 38 and 44 attached to the segment 56, and the function blocks 47 of the field device 38, as described in more detail below. In some embodiments, the treeview control 172 depicted in FIG. 6 may be implemented as executable code instructions stored on non-transitory, tangible, machine-readable media, such as the computer memory of the computers 12 shown in FIG. 1. Indeed, the treeview control 172 may be included in a graphical user interface in the HMI 14, the MES 16, the DCS 18, and the SCADA 20. Additionally, the screen view 170 may be included in the alarm viewers 80. As depicted the treeview control 172 may include a hierarchy of components, such as a root node 174 labeled PDOA-22, and a child node 176 of the root node 174 labeled PFFA-21. Other nodes are also depicted, such as a child node 178 of the node 176 labeled PFFA-21_Segment1, and three child nodes 180, 182, and 184 of the node 178, labeled Decommissioned Devices, FBK Rock Application (Mike), and FBK Rock

Application (Rocky), respectively. Additionally, the node 184 is depicted as having function block children nodes 186, 188, 190, 192, 194, 196, 198.

Each of the nodes 174, 176, 178, 180, 182, and 184 may be virtual representations of hardware components of the industrial control system 10 depicted in FIG. 1. For example, the node 174 may represent the controller 26, the node 176 may represent the linking device 46, and the node 178 may represent the segment 56 of the linking device 46. Further, the nodes 182 and 184 may represent field devices 44 and 38 connected to the segment 56 of the linking device 46. Additionally, the nodes 186, 188, 190, 192, 194, 196, and 198 may represent the function blocks 47 of the device 38. By providing for alert icons with the virtual node representations of respective system 10 hardware components, the alerts associated with the corresponding system 10 hardware components may be more easily visualized and acknowledged.

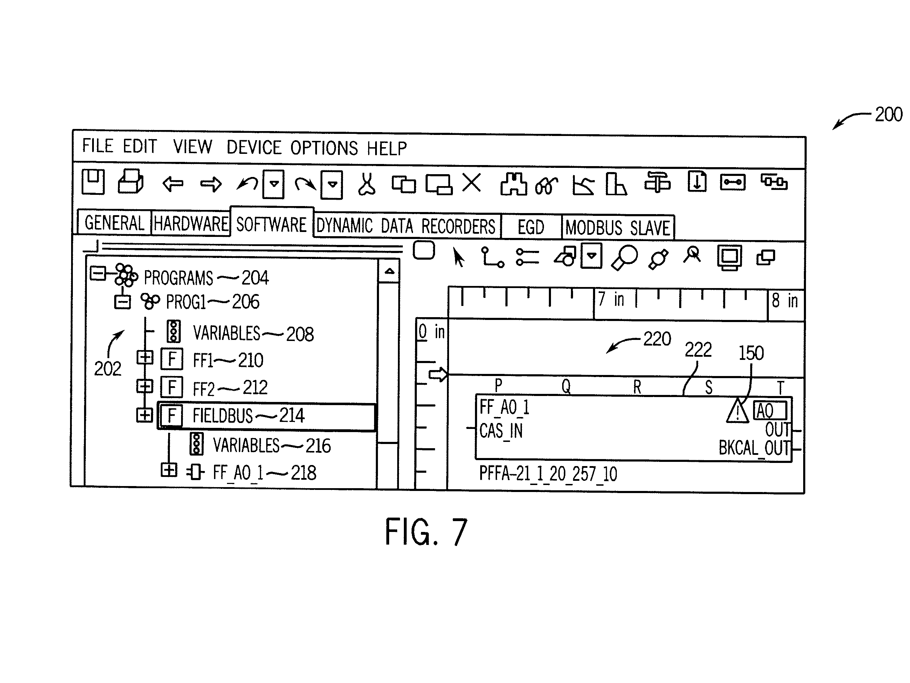

The treeview control 172 enables the user to view alerts associated with the root node 174 (e.g., controller 26) and related components (e.g., field devices 38, 40, 42, and 44, function blocks 47, 49, 51, and 55, segment 56, and linking devices 46 and 48). In certain embodiments, the treeview control 172 may display visual alerts by using one or more of the alarm icons 150, 152, 154, 156, 158, 160, 162, 164, and 166 illustrated in FIG. 5, to inform the user of which components and subcomponents may have alarms and events. In one embodiment, such as the embodiment depicted in FIG. 6, if a subcomponent node has an alert, then the child node, the child node's parent node, any parent nodes of the parent (i.e., grandparent node), and so forth, including the root node 174, may also show the respective alarm icons 150, 152, 154, 156, 158, 160, 162, 164, and 166 of the subcomponent node. That is, if a child node has an alert, then all nodes in the tree linked to the child node, including the root node, may also show one or more of the alarm icons 150, 152, 154, 156, 158, 160, 162, 164, and 166 corresponding to the alert of the child node. For example, the function block node 196 may include an alarm icon 150 indicating the activation of a process alarm. Accordingly, the parent device node 184 may also include the alarm icon 150 to indicate that a subcomponent (e.g., node 196) may have an active alert. In turn, the linking device segment node 178 (i.e., parent node to node 184) may also include the alarm icon 150 to indicate an alert in the subcomponent. Further, the linking device node 176 (i.e., parent node to node 178) may also include the alarm icon 166 to indicate an alert in the subcomponent. Additionally, the root controller node 174 may also include the icon 154 to indicate an alert in the subcomponent. By presenting alarm icons, such as the icons 150, 152, 154, 156, 158, 160, 162, 164, and 166, at various levels of the treeview 172, the treeview control may enable a quick an efficient view of components having alert information. Indeed, the visual alerts may be included in any number of virtual representation of the components of the system 10 that may be displayed, for example, by the HMI 14, the MES 16, the DCS 18, the SCADA 20, and the alarm viewers 80, such as the virtual representation of a function block described in more detail below with respect to FIG. 7.

FIG. 7 is a screen view 200 of an embodiment of a treeview control 202 of a graphical user interface that displays visual alarm information in a software context. That is, the treeview control 202 depicts virtual representations of software components of the system 10, such as software programs or control loops. In some embodiments, the treeview control 202 depicted in FIG. 7 may be implemented as executable code instructions stored on non-transitory, tangible, machine-readable media, such as the computer memory of the computers 12 shown in FIG. 1. Indeed, the treeview control 202 may be included in a graphical user interface in the HMI 14, the MES 16, the DCS 18, the SCADA 20, and the alarm viewers 80. As depicted, the treeview control 202 may include a hierarchy of software components, such as a root node 204 labeled Programs, and a child node 206 of the root node 204 labeled Prog1. Other nodes are also depicted, such as a child node 208 of the node 206 labeled Variables, and three child nodes 210, 212, 214 of the node 208 labeled FF1, FF2, and Fieldbus, respectively. Additionally, the node 214 is depicted as having a child node 216 labeled Variables, and a child function block node 218 labeled FF_AO_1.

Each of the nodes 204, 206, 208, 210, 212, 214, 216, and 218 may be virtual representations of software components of the industrial control system 10 depicted in FIG. 1. For example, the node 204 may represent the programs or control loops of the system 10, and the node 206 may represent a subset of the programs or control loops of the node 204. The node 208 may represent variables related to the node 206. The nodes 210, 212, and 214 may each represent Fieldbus Foundation control loops of the node 206. The node 216 may represent variables used by the node 214, and the node 218 may represent a function block, such as the function block represented by the node 196 shown in FIG. 6. By providing for alarm icons with the virtual node representations of the software components of the system 10, the alerts associated with the corresponding software components may be more easily visualized and acknowledged.

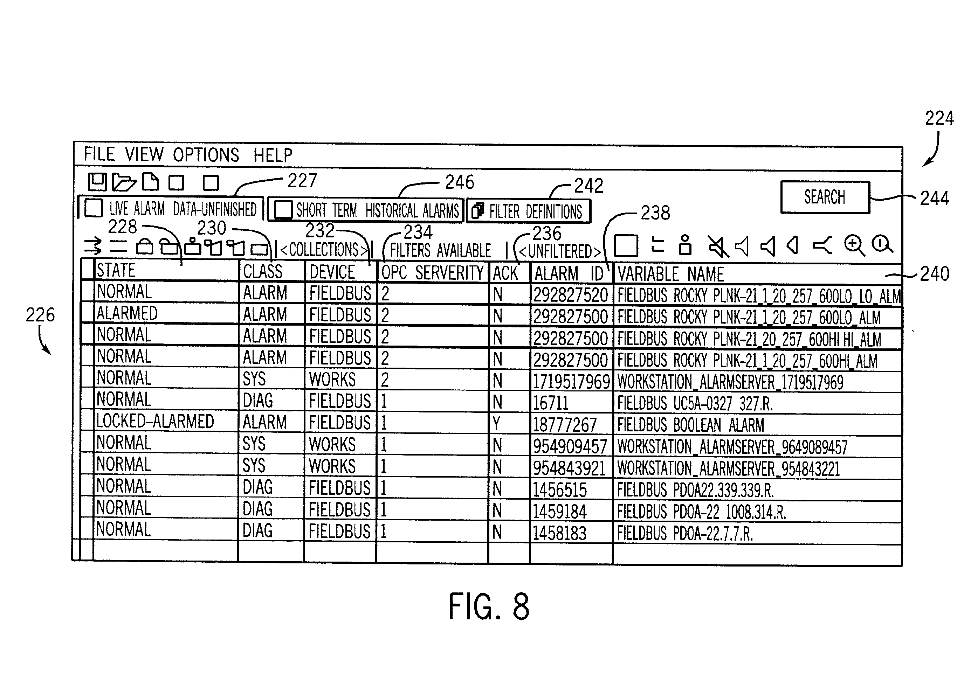

The user may select a node, such as the node 214, to visualize certain elements, such as a control loop diagram 220 of the node 214. In the depicted embodiment, the control loop diagram 220 includes a function block 222 having the alarm icon 150. The function block 222 may be a virtual representation of the function block represented by node 218 and node 196 shown in FIG. 6. Indeed, more than one virtual representation of the same hardware or software component of the system 10 may be provided, and each virtual representation may include an alert icon. By illustrating alert icons at any location in the graphical user interface that the component is virtually represented, the systems and processes disclosed herein consistently present the visual alert information regardless of the view selected by the user. That is, the user may be viewing the system 10 through various screens of the HMI 14, the MES 16, the DCS 18, the SCADA 20, and the alarm viewers 80 and receive the same alert information. Additionally, a list of all current alerts of the system 10 may be displayed, as described in more detail below with respect to FIG. 8.

FIG. 8 is a screen view 224 of an embodiment of a list control 226 of a graphical user interface that may display all of the alerts currently active in the system 10. The list control 226 may enable the user to sort and filter all alerts. By sorting and filtering the alert information, the user may more efficiently acknowledge alerts, analyze the alert information, and respond to any issues raised by the alerts.

To view the current alerts, the user may activate a button 227, which may then instruct the list control 226 to display all of the alerts associated with components of the system 10. Further displaying and sorting of the alerts may be provided by using one or more of the columns 228, 230, 232, 234, 236, 238, and 240 of the list control 226. For example, column 228 may be used to display and sort for alarm state, column 230 may be used to display and sort for alarm class (e.g., type of alarm), column 232 may be used to display and sort for field devices issuing the alarm, column 234 may be used to display and sort for OPC alarm severity, column 236 may be used to display and sort for acknowledgement of alarm status (e.g., acknowledged alarm or unacknowledged alarm), column 238 may be used to display and sort for alarm ID, and column 240 may be used to display and sort for variable name. The variable name may be displayed in a display format, such as "controller/field device tag/block tag/Fieldbus parameter name" format. By providing for alert sorting capabilities, the list control 226 enables the quick and efficient organization of displayed alert information.

Filtering (i.e., the selective display of information) may also be provided by the screen view 224. For example, a filter definitions button 242 may be provided and used for creating a variety of filters. A filter may consist of computer instructions, including mathematical expressions, regular expressions, or the like, that use an input set of data (e.g., alert information) and reduce to input set according to programmable rules. For example, a filter may be created that shows only unacknowledged alarms. In another example, a filter may be created that shows only a certain class of alarm. In yet another example, a filter may be created that shows only alarms having a certain OPC severity. By providing for filtering capabilities, the screen view 224 enables a more focused presentation of alert data. Additionally, search capabilities are provided, that enable locating desired alert information. For example, a search button 244 may be activated and used to locate specific alerts by date, time, alert class, alert state, field device, OPC severity, acknowledgment status, alarm ID, and variable name.

Historical alarm information may also be visualized. In one embodiment, a historical alarms button 246 is provided for displaying historical alarm information on the list control 226. For example, one day, one week, one month, one year of previously reported alarm information may be displayed by the list control 226. Presenting historical alarm information may enable the analysis and optimization of the system 10 by deriving alert patterns from alerts, such as by determining which field devices have alerts more often or less often than others, which process alarms get triggered more often or less often than others. Accordingly, underlying issues associated with these alerts may be investigated and fixed.

Technical effects of the invention include the visual presentation of alert information from field devices in a variety of alert clients, including alert clients communicating in a variety of protocols. For example, the technical effects include receiving and translating alert information from a first protocol (e.g., Fieldbus protocol) into a second protocol (e.g., SDI) for display to a user. Further technical effects include the automatic incorporation and distribution of visual alert information for field devices once the field devices are physically attached to the industrial control system. Such a "plug and play" approach enables visual alert information to be gathered from field devices and provided to controllers and to alert clients once the field device is physically attached to the industrial control system while minimizing human involvement.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. An industrial process control system (10) comprising:
a controller (26, 27) configured to couple to a field device (38, 40, 432, 44); and
an alarm viewer (80) configured to couple to the controller (26, 27), wherein the alarm viewer (80) comprises a user interface control, wherein the controller (26, 27) is configured to receive alert information from the field device (38, 40, 42, 44) in a first protocol and communicate the alert information to the alarm viewer (80) in a second protocol, and the alarm viewer (80) is configured to present, via the user interface control, a first alert indication of the alert information.

2. The system (10) of claim 1, wherein the user interface control comprises a treeview control (172, 202), a list control (226), or a combination thereof.

3. The system (10) of claim 1 or claim 2, wherein the user interface control comprises a treeview control (172, 202) configured to display the first alert indication at a first level of the treeview control, and the first level represents a function block (47, 49, 51, 55) of the field device (38, 40, 42, 44).

4. The system (10) of claim 3, wherein the treeview control (172, 202) is configured to display a second alert indication at a second level of the treeview control (172, 202), wherein the second level represents the field device (38, 40, 42, 44) and the second alert indication is based on the first alert indication.

5. The system (10) of any one of claims 1 to 4, wherein the alert information comprises an event, an alarm, or a combination thereof.

6. The system (10) of any one of claims 1 to 5, wherein the alert indication comprises a visual alert indication, an audio alert indication, or a combination thereof, wherein the alert indication preferably comprises a visual alert indication having an icon (150, 152, 154, 156, 158, 160, 162, 164, 166).

7. The system (10) of any one of claims 1 to 6, wherein the first protocol comprises a Foundation Field bus protocol, a HART protocol, or a combination thereof.

8. The system (10) of any one of claims 1 to 7, wherein the second protocol comprises a serial data interface (SDI) protocol, a transmission control protocol/internet protocol (TCP/IP), a user datagram protocol (UDP), a hypertext transfer protocol (HTTP), an institute of electrical and electronics engineers (IEEE) 802.11 protocol, a Zigbee protocol, Z-Wave, or a combination thereof.

9. The system (10) of any one of claims 1 to 8, comprising a human-machine interface (HMI) system (14), a manufacturing execution system (MES) (16), a distributed control system (DCS) (18), a supervisor control and data acquisition (SCADA) system (20), or a combination thereof, having the alarm viewer (80).

10. The system (10) of any one of claims 1 to 9, comprising an alert server (70), wherein the controller (26, 27) is configured to couple to the alert server (70), and the alert server (70) is configured to couple to the alarm viewer (80).

11. A method, comprising:
collecting, via a controller (26, 27) of an industrial control system (10), alerts from a field device (38, 40, 42, 44) in a first protocol;
transferring, via the controller (26, 27) of the industrial control system (10), the alerts to an alert viewer (80) in a second protocol, wherein the first protocol is different from the second protocol; and
providing, via a user interface control of the alert viewer (80), one or more alert indications to a user.

12. The method of claim 11, wherein the first protocol comprises a Fieldbus Foundation protocol, a Profibus protocol, a HART protocol, or a combination thereof.

13. The method of claim 11 or claim 12, wherein the second protocol comprises a serial data interface (SDI) protocol, a transmission control protocol/internet protocol (TCP/IP), a user datagram protocol (UDP), a hypertext transfer protocol (HTTP), an institute of electrical and electronics engineers (IEEE) 802.11 protocol, a Zigbee protocol, a Z-Wave, or a combination thereof.

14. The method of claim 11, 12 or 13, wherein the providing the one or more alert indications to the user comprises displaying a first alert indication at a first level of a treeview control of the user interface control, wherein the first level represents a function block of the field device, and preferably comprises displaying a second alert indication at a second level of the treeview control of the user interface control, wherein the second level represents the field device and the second alert indication is based on the first alert indication.

15. The method of any one of claims 11 to 14, wherein transferring the alerts to the alert viewer in the second protocol comprise transferring, via the controller of the industrial control system, the alerts to an alarm server (70) in the second protocol, and transferring, via the alarm server, the alerts to the alert viewer (80).

16. A non-transitory tangible computer-readable medium comprising executable code, the executable code comprising instructions for performing the method of any one of claims 11 to 15.
